# EUROPÄISCHE PATENTSCHRIFT

(11) **EP 0 943 861 B1**
(45) Veröffentlichungstag und Bekanntmachung des Hinweises auf die Patenterteilung: **07.08.2002**
(21) Anmeldenummer: 98123330.7
(22) Anmeldetag: 08.12.1998
(51) Int. Cl.: F16N 7/32, F16N 39/04

(54) **Vorrichtung zur Versorgung von Schmierstellen mit fluidem Schmiermittel**
Device for wetting of surfaces or cavities with a liquid or a mixture of liquids
Dispositif pour réaliser le mouillage de surfaces ou de cavités avec un liquide ou un mélange de liquides

(30) Priorität: 18.03.1998 DE 19811734
(43) Veröffentlichungstag der Anmeldung: 22.09.1999
(73) Patentinhaber: Stärk, Rüdiger, 99887 Georgenthal (DE); Stärk, Lieselotte, 99887 Georgenthal (DE); Stärk, Andreas, 99887 Georgenthal (DE)
(72) Erfinder: Stärk, Rüdiger, 99887 Georgenthal (DE); Stärk, Lieselotte, 99887 Georgenthal (DE); Stärk, Andreas, 99887 Georgenthal (DE)
(74) Vertreter: Liedtke, Klaus, Dr.

(56) Entgegenhaltungen:
- US-A- 3 491 855
- US-A- 4 131 658
- US-A- 4 284 670
- US-A- 4 637 493
- US-A- 5 327 998

## Beschreibung

Die Erfindung betrifft eine Vorrichtung zur Benetzung von Oberflächen und Hohlräumen sowie deren Inhalt mit Fluiden oder Fluidgemischen, bei der das Fluid oder Fluidgemisch mit Hilfe eines Luftstromes an die betreffenden Stellen geführt wird, mit einem Vorratsgefäß für das Schmiermittel Wasserabscheider mit Filter, einem Druckregler, einem Absperrventil und einem Nebelöler, ausgerüstet ist.

Derartige Anordnungen erfüllen auf pneumatischem Wege mittels Vernebelung des Fluides oder Fluidgemisches eine Transportaufgabe und einen anschließenden Effekt der Verteilung und Benetzung unter anderem für Schmierzwecke oder zum Zwecke der Filmbildung. Dabei wird beim Durchströmen der Vorrichtung mit Druckluft ein Fluidnebel erzeugt und dem Druckluftstrom hinzugefügt. Der Fluidnebel selbst wird mit der Druckluft zum gewünschten Ort geführt bildet dort einen Fluidniederschlag, der in Abhängigkeit von der jeweiligen Anwendung eine unterschiedliche Filmdicke aufweist. Die Filmdicke wird über die Zugabe des Fluid oder Fluidgemisches durch Verstellung vom Drosselquerschnitten bestimmt.

Nachteilig ist dabei, daß die Stellen des zu benetzenden Systems zwar weitgehend wartungsfrei versorgt werden können, daß aber die Fluidmenge, die wegen ihrer störenden Wirkung in der Umgebung auf minimale Werte eingestellt werden muß, aber andererseits aus Sicherheitsgründen immer verhältnismäßig reichlicher Dosierung bedarf. Es besteht außerdem die Gefahr, daß die an sich über einen längeren Zeitraum wartungsfreie arbeitende Benetzung nicht überwacht wird, so daß ein Ausfall der ordnungsgemäßen Benetzung nicht bemerkt und deshalb eine ausreichende Zuverlässigkeit bei langen Betriebszeiten nicht gewährleistet werden kann.

Um die Sicherheit gegen eine Fluiunterversorgung mit Fluid oder Fluidgemischen zu gewährleisten, wäre die Ermittlung des Fluidgehaltes im Luftstrom erforderlich. Bei den im Stand der Technik bekannten Vorrichtungen kann der nebelförmige Fluidgehalt der strömenden Druckluft jedoch nicht sicher bestimmt werden.
Falls auf die Überwachung des Fluidgehaltes der strömenden Luft nicht ganz verzichtet wird, geht die Überwachung daher nur von mittelbaren Annahmen, wie z.B. die Überwachung der Luftströmung, aus oder bedient sich aufwendiger Injektionssysteme zur zwangsweisen Dosierung der Fluide oder Fluidgemische. Eine derartige Anordnung ist in DE 40 00 733 A1 beschrieben.
Weiterhin wirken sich bei den bekannten Verfahren die Temperaturabhängigkeit der Fluidviskosität und die geringen, zu dosierenden Mengen nachteilig auf die Qualität des Schmiervorganges aus.

Der Erfindung liegt die Aufgabe zugrunde, eine Vorrichtung der eingangs genannten Art anzugeben, bei der die Menge des vernebelten Fluides oder Fluidgemisches auf dem minimal erforderlichen Niveau gehalten und dabei gleichzeitig die Zuverlässigkeit der Versorgung garantiert werden kann, in dem der Ausfall des transportierenden Luftstromes, des Zusatzes von Fluid oder Fluidgemsiches oder der Nebelbildung rechtzeitig signalisiert werden.

Erfindungsgemäß wird die Aufgabe durch eine Anordnung mit den in den Patentansprüchen angegebenen Merkmalen gelöst.

Die erfindungsgemäße Anordnung besteht aus
- einer pneumatischen Wartungseinheit bekannter Bauform mit im allgemeinen üblichen Einzelkomponenten Wasserabscheider mit Filter, Druckregler, Nebelöler und dergleichen.
Weiterhin kann dieser Aufbau noch zusätzliche Komponenten wie z.B. Abschaltventile und Druckmeßgeräte enthalten.

Vorteile der erfindungsgemäßen Vorrichtung sind,
- eine selbstlimitierende Heizung die die Viskosität des Fluides oder Fluidgemisches bei äußeren Temperaturänderungen konstant hält,
- daß durch die selbstlimitierende Wirkung der Heizung die Verbrennung des Fluides oder Fluidgemisches bei geringem Füllstand im Vorratsgefäß ausgeschlossen wird,
- daß das Ölnebelgerät ein proportionales Verhalten aufweist, so daß sich die Meßgröße n = f(t) auf einen Luftstrom definierter Größe bezieht und somit die Menge des beigefügten Fluides dem transportierenden Luftstrom ebenfalls proportional ist.

Die Erfindung wird im folgenden anhand eines Ausführungsbeispieles für eine pneumatische Wartungseinheit näher erläutert. In der zugehörigen Zeichnung zeigen:
Figur 1 eine schematische Darstellung des Pneumatikteils,
Figur 2 die Anordnung der Meßstelle im Zusammenwirken mit der Logikeinheit und

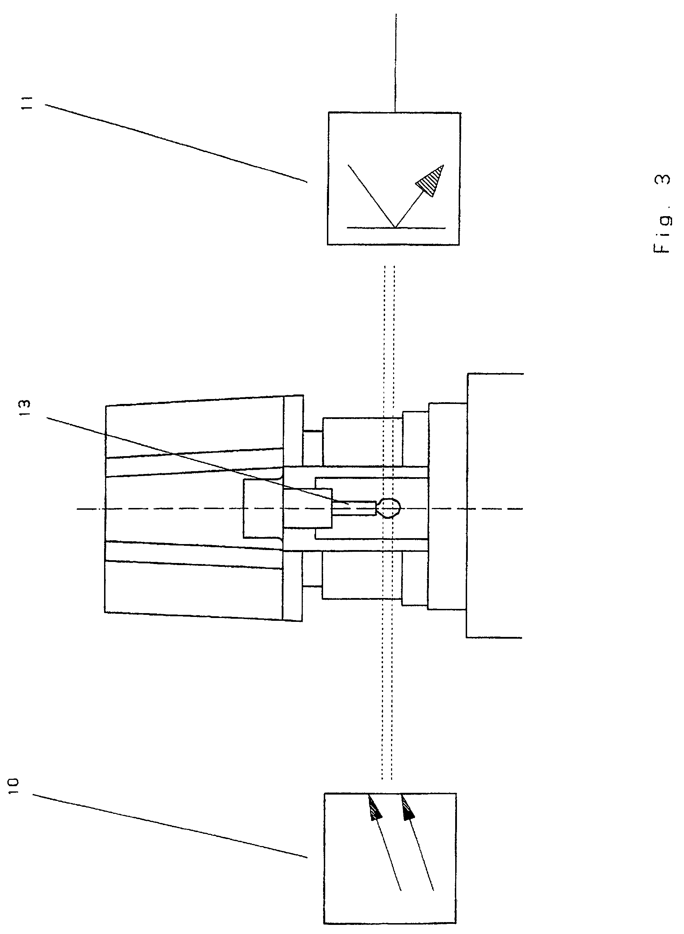

Figur 3 die Einzelheit der Meßstelle mit Injektordüse.

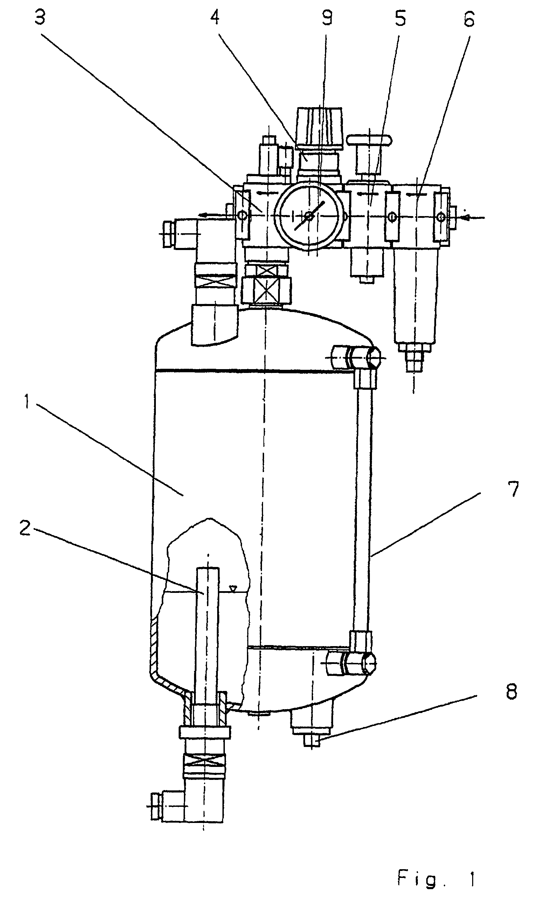

Wie aus Figur 1 ersichtlich ist, ist der Nebelöler (3) mit einem tankähnlichen Vorratsgefäß (1) zur Aufnahme des Fluides oder Fluidgemisches (12) versehen. Die Wartungseinheit enthält die üblichen Baugruppen Nebelöler (3), Druckregler (4) mit Manometer (9), Abschaltventil (5) und Filter (6). Das Vorratsgefäß (1) ist mit einem optischen Schauglas (7) bekannter Bauart und erfindungsgemäß mit einer selbstlimitierenden elektrischen Heizung (2) ausgerüstet. Zum Befüllen des Vorratsgefäßes (1) ist ein Bodenventil (8) angeordnet, das im Zusammenwirken mit einem Injektor des Nebelölers (3) das Ansaugen des Fluides oder Fluidgemisches (12) ermöglicht.

Beim Durchströmen der Wartungseinheit mit Druckluft wird der Fluidnebel in bekannter Weise erzeugt und dem Druckluftstrom hinzugefügt.
Der Fluidnebel selbst wird mit der Druckluft zum Ziel der Anwendung geführt und kann dort ebenfalls in bekannter Art und Weise einen Fluidniederschlag bilden, der die für die jeweilige Anwendung erforderliche Filmdicke aufweist, bzw. andere Funktionen im Zusammenhang mit dem Niederschlag erzeugt, wie z.B. auch Schmierwirkungen.
Die Dosierung der Fluidmenge wird am Nebelöler (4) durch Verstellung von Drosselquerschnitten bestimmt.

Mit der erfindungsgemäßen Anordnung ist es möglich,
- Viskositätsänderungen des Fluides oder Fluidgemisches zu verringern,
- die Fluid- oder Fluidgemischzufuhr zum Transportmedium Luft zu überwachen,
- quantitative Aussagen für vorgegebene Grenzen und tatsächlisch vorhandene Größen, wie z.B. Tropfenanzahl pro Zeiteinheit n(t) zu treffen und
- Auswertungen vorzunehmen.

Bei der erfindungsgemäßen Anordnung wird am Injektor (13) die in den Luftstrom tropfenförmig eintretende Ölmenge mittels einer Lichtschranke, bestehend aus Sender (10) und Empfänger (11) abgetastet.
Das Ölnebelgerät (3) weist ein proportionales Verhalten auf, d.h. die aus dem Injektor (13) in Tropfenform abgegebene Ölmenge ist proportional der Größe des Luftstromes.
Mit einem elektronischen Zähler (14) wird die Tropfenanzahl registriert und das Zählerergebnis auf Zeiteinheiten bezogen an die elektronische Logikeinheit (15) weitergeleitet.
Die auf die Zeiteinheit bezogene Tropfenzahl wird mit vorgegebenen Zahlenwerten für die Mindesttropfenzahl pro Zeiteinheit und die Maximaltropfenzahl pro Zeiteinheit in der Logikeinheit (15) ausgewertet und daraus können Ausgangsinformationen gebildet werden.

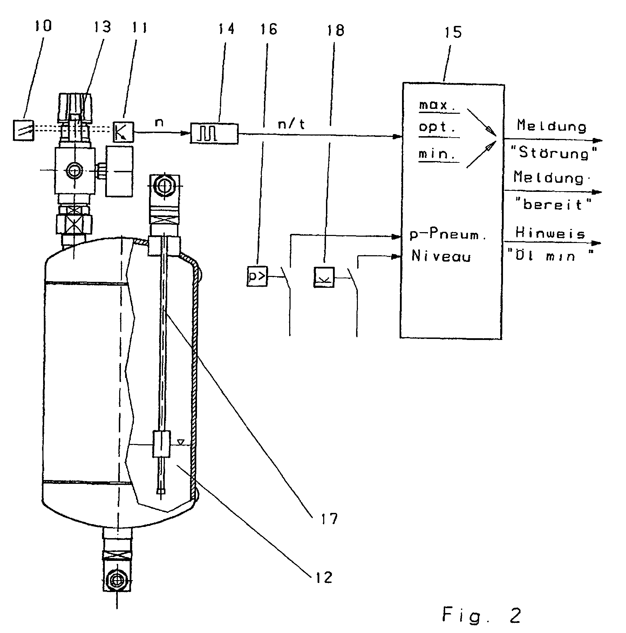

Durch die selbstlimitierende elektrische Heizung (2) wird im Fluid oder Fluidgemischvorrat eine Temperatur oberhalb oder nahe der Umgebungstemperatur erzeugt, wodurch eine unerwünschte Veränderung der Viskosität vermieden wird.
Die selbstlimitierende Wirkung der Heizung (2) ist so ausgelegt, daß eine Verbrennung des Fluides oder Fluidgemisches bei funktionsbedingten Absinken des Schmiermittelspiegels unter die benetzten Flächen des Heizkörpers (3) nicht erfolgen kann.
Das verfahrensbedingte Absinken des Fluid- bzw. Fluidgemisschniveau (12) wird mit einem Niveauschalter (17), Symbol (16) in Figur 2, überwacht. Das Ansprechen des Nivauschalters (17) führt in der Logikeinheit (15) zu einem Hinweis auf diese Situation.
Es ist möglich, daß eine Auswertung aller Betriebsbedingungen in logischer Abhängigkeit interpretiert und als Schlußfolgerungen ein entsprechendes Signal nach außen gegeben wird.
Die grundsätzlliche Betriebsbereitschaft des Systemes wird mittels eines Druckschalters (18) signalisiert.

### BEZUGSZEICHENLISTE

- 1: Vorratsgefäß
- 2: selbstlimitierende elektrische Heizung
- 3: Nebelöler
- 4: Druckregler
- 5: Abschaltventil
- 6: Filter
- 7: Schauglas
- 8: Bodenventil
- 9: Manometer
- 10: Sender der Lichtschranke
- 11: Empfänger der Lichtschranke
- 12: Fluid oder Fluidgemisch
- 13: Injektor
- 14: elektronischer Zähler
- 15: Logikeinheit
- 16: Druckschalter (als Schaltsymbol)
- 17: Niveauschalter
- 18: Niveauschalter (gem. 17, jedoch als Schaltsymbol)

## Patentansprüche

1. Vorrichtung zur Benetzung von Oberflächen und Hohlräumen sowie deren Inhalt mit Fluiden oder Fluidgemischen, bei der das Fluid oder Fluidgemisch mit Hilfe eines Luftstromes an die zu benetzende Stelle geführt wird, mit einem Vorratsgefäß (1) mit einem Niveauschalter (17) für das Fluid oder Fluidgemisch, einem Wasserabscheider mit Filter (6), einem Druckregler (4), einem Absperrventil (6) einem Nebelöler (3) und einem Druckschalter (16), **dadurch gekennzeichnet, daß** der Nebelöler (3) proportionales Verhalten zwischen durchströmender Luft und zugesetztem Fluid oder Fluidgemisch aufweist und in dem Vorratsgefäß (1) eine selbstlimitierende elektrische Heizung angeordnet ist.

2. Vorrichtung nach Anspruch 1, **dadurch gekennzeichnet, daß** die selbstlimitierende Heizung im unterem Bereich des Vorratsbehälters (1) angeordnet ist, so daß bei abnehmender Füllung des Vorratsbehälters (1) stets eine möglichst große Heizungsoberfläche vom Fluid oder Fluidgemisch benetzt ist.

3. Vorrichtung nach Anspruch 1 oder 2, **dadurch gekennzeichnet, daß**
- am Nebelöler (3) die Fluidinjektion bei Entstehen des Injektionstropfen mittels Lichtschranke zahlenmäßig erfaßt wird,
- die Tropfenanzahl auf eine Zeitbasis bezogen und als zeitabhängige Meßgröße n = f(t) weiterverarbeitet wird,
- die Meßgröße n = f (t) in einer Logikeinheit mit vorgegebenen Maximalwerten verglichen wird
- und beim Überschreiten der Maximal- bzw. Minimalwerte ein Auswertesignal gebildet wird.

4. Vorrichtung nach Anspruch 3, **dadurch gekennzeichnet, daß**
- die Meßgröße n = f (t) in einer Logikeinheit mit vorgegebenen Maximal- und Minimalwerten verglichen wird und
- beim Überschreiten der Maximal- bzw. Minimalwerte ein Auswertesignal gebildet wird.

5. Vorrichtung nach Anspruch 3, **dadurch gekennzeichnet, daß** die Meßgröße n = f (t) in einer Logikeinheit mit einem vorgegebenen Sollwert verglichen wird und
- bei Abweichungen von diesem Sollwert die zugeführte Fluidmenge korrigiert wird.

6. Vorrichtung nach Anspruch 5, **dadurch gekennzeichnet, daß** als Stellglied für die Korrektur der Fluidmenge die Injektordüse verwendet wird.

## Claims

1. Device for the wetting of surfaces and hollow spaces and of their content with fluids or fluid mixes, in which the fluid or the fluid mix is led to the place to be wetted with the help of an air flow, with a storage vessel (1) with a level switch (17) for the fluid or fluid mix, a water separator with filter (6), a pressure regulator (4), a stop valve (6) an oil-mist lubricator (3) and a pressure switch (16), **characterized in that** the oil-mist lubricator (3) presents a proportional action between passing air and added fluid or fluid mix, and **in that** a self-limiting electrical heating is arranged in the storage vessel (1).

2. Device as claimed in claim 1, **characterized in that** the self-limiting heating is arranged in the bottom area of the storage reservoir (1) such that a maximum possible heating surface is always wetted by the fluid or fluid mix when the fill level in the storage reservoir (1) decreases.

3. Device as claimed in claim 1 or 2, **characterized in that**
- on the oil-mist lubricator (3), fluid injection is detected numerically upon the formation of the injection drop using a light barrier;
- the drop number is related to a time basis, and processed further as a time-dependent measured quantity n = f(t);
- the measured quantity n = f(t) is compared to predefined maximum values in a logic unit; and **in that**
- an evaluation signal is generated when the maximum or, correspondingly, the minimum values are exceeded.

4. Device as claimed in claim 3, **characterized in that**
- the measured quantity n = f (t) is compared to predefined maximum and minimum values in a logic unit; and **in that**
- an evaluation signal is generated when the maximum or, correspondingly, the minimum values are exceeded.

5. Device as claimed in claim 3, **characterized in that**
- the measured quantity n = f(t) is compared to a predefined setpoint value in a logic unit; and **in that**
- the fluid quantity fed in is corrected in case of deviations from this setpoint value.

6. Device as claimed in claim 5, **characterized in that** the injector nozzle is used as the final control element for the correction of the fluid quantity.

## Revendications

1. Dispositif pour l'aspersion de surfaces, de cavités et de leur contenu par des fluides ou des mélanges de fluides, où le fluide ou le mélange de fluides est conduit à l'emplacement à asperger au moyen d'un courant d'air, présentant un réservoir (1) avec un interrupteur de niveau (17) pour le fluide ou le mélange de fluides, un séparateur d'eau avec filtre (6), un régulateur de pression (4), une vanne d'arrêt (6), un lubrificateur à embruns d'huile (3) et un interrupteur à pression (16), **caractérisé en ce que** le lubrificateur à embruns d'huile (3) présente un rapport proportionnel entre l'air débité et le fluide ou le mélange de fluides ajouté, et qu'un chauffage électrique à auto-limitation est disposé dans le réservoir (1).

2. Dispositif selon revendication 1, **caractérisé en ce que** le chauffage à auto-limitation est disposé dans la partie inférieure du réservoir (1), de telle sorte qu'une surface de chauffe aussi étendue quc possible est toujours aspergée par le fluide ou le mélange de fluides en cas de niveau décroissant du réservoir (1).

3. Dispositif selon revendication 1 ou 2, **caractérisé en ce que**
- l'injection de fluide est saisie numériquement par une barrière photoélectrique sur le lubrificateur à embruns d'huile (3) à la formation de la goutte d'injection,
- le nombre de gouttes est rapporté à une base temporelle et traité comme grandeur de mesure variable en temps n = f (t),
- la grandeur de mesure n = f (t) est comparée à des valeurs maximales données dans une unité logique
- un signal d'évaluation étant formé en cas de dépassement des valeurs maximales ou minimales.

4. Dispositif selon revendication 3, **caractérisé en ce que**
- la grandeur de mesure n = f (t) est comparée à des valeurs maximales et minimales données dans une unité logique
- un signal d'évaluation étant formé en cas de dépassement des valeurs maximales ou minimales.

5. Dispositif selon revendication 3, **caractérisé en ce que**
- la grandeur de mesure n = f (t) est comparée à une valeur de consigne donnée dans une unité logique
- le débit de fluide conduit étant corrigé en cas de variation par rapport à cette valeur de consigne.

6. Dispositif selon revendication 5, **caractérisé en ce que** la buse d'injecteur est utilisée en tant que composant de réglage pour la correction du débit de fluide.
